Europäisches Patentamt

**European Patent Office**

**Office européen des brevets**

(11) Numéro de publication: **0 015 300**
**A1**

## DEMANDE DE BREVET EUROPEEN

(21) Numéro de dépôt: **79100742.0**

(51) Int. Cl.³: **B 23 B 3/06**

(22) Date de dépôt: **12.03.79**

(43) Date de publication de la demande: **17.09.80**
**Bulletin 80/19**

(84) Etats contractants désignés: **BE CH DE FR GB IT LU NL SE**

(71) Demandeur: **"Mondiale", Avenue de Schaerbeek, 55, B-1800 Vilvoorde (BE)**

(72) Inventeur: **Muguerza, Luis, 29, rue Edmond Picard, B-1180 Ixelles (BE)**

(74) Mandataire: **Pirson, Jean et al, c/o Bureau Gevers, S.A. rue de Livourne, 7 bte 1, B-1050 Brussels (BE)**

(54) Procédé de tournage et tour pour la mise en oeuvre de ce procédé.

(57) Procédé de tournage qui consiste à mettre en contact avec la pièce à tourner au moins deux outils (2, 3) ayant des caractéristiques de coupe identiques et à déplacer ces outils pour qu'ils effectuent sensiblement le même travail, simultanément et en opposition, sur la même surface de la pièce et sensiblement dans une même zone de cette dernière s'étendant à proximité d'un plan perpendiculaire (7) à l'axe de la pièce et passant par l'axe d'un des outils, et tour pour la mise en œuvre de ce procédé.

EP 0 015 300 A1

ACTORUM AG

"Procédé de tournage et tour pour la mise en oeuvre de ce procédé"

La présente invention a pour objet un procédé de tournage.

On connaît déjà, pour réduire les temps d'usinage, l'utilisation simultanée de deux outils pour réaliser par tournage une même pièce. Ce procédé connu consiste à faire travailler les outils dans deux zones distinctes de la pièce pour réaliser des travaux différents. Ce procédé, s'il permet de réduire les temps d'usinage, offre toutefois quelques inconvénients non négligeables. En effet, pour que les deux outils affectés à des travaux différents puissent être utilisés dans des conditions optimales, il faudrait, dans pratiquement tous les cas, que les vitesses de tournage (nombre de tours) soient différentes. On est donc amené à choisir une vitesse convenant parfaitement à l'un des outils, l'autre outil travaillant alors dans de mauvaises conditions, ce qui entraîne non seulement une usure anormale de cet outil, mais aussi une finition imparfaite de la pièce usinée par ce dernier outil. De plus, cette façon connue de procéder ne peut être mise en oeuvre que pour la réalisation de pièces dont les dimensions sont telles qu'elles puissent résister à la flexion résultant d'efforts différents auxquels elles sont soumises par l'action des outils travaillant dans des zones différentes des pièces. Il faut aussir tenir compte du fait que les temps de travail des deux outils sont pratiquement toujours différents, ce qui entraîne des temps morts pour l'un ou l'autre outil.

L'invention a pour but de remédier aux inconvénients précités et de procurer un procédé qui permet de placer les deux outils dans des conditions idéales de travail, ce qui entraîne une usure minimale desdits outils pour une qualité de fini idéal de la pièce, d'équilibrer les efforts pièce-outils, ce qui permet de supprimer la flexion de pièces même de faible résistance à celle-ci, et enfin de supprimer pratiquement les temps morts pendant le travail des outils, ce qui permet encore de réduire, par rapport au procédé connu précité, les temps d'usinage. Le procédé suivant l'invention permet également de remédier à un des inconvénients du procédé connu susdit et qui résulte des problèmes soulevés par la fixation et l'entraînement de la pièce lorsque les deux outils travaillent à proximité de chacune des extrémités de celle-ci et qu'il est nécessaire de libérer les zones de travail des outils. Pour libérer ces zones, on monte la pièce entre des pointes entraîneuses, mais, l'utilisation de celles-ci offre un nouvel inconvénient du fait qu'elles ne permettent pas toujours de transmettre à la pièce un couple suffisant pour l'emploi simultané de deux outils. Comparé au procédé de tournage connu, à un seul outil, suivant lequel l'avance de l'outil est fixe pour un état de finition donné et le temps d'usinage dépend, d'une part, de la vitesse de rotation de la pièce et, d'autre part, de l'épaisseur du copeau, le procédé suivant l'invention offre l'avantage, grâce à l'utilisation simultanée de deux outils travaillant dans les mêmes conditions, de permettre, pour un même état de finition de la pièce, pour les mêmes vitesses de rotation et épaisseur du copeau que l'on obtiendrait et que l'on utiliserait à l'aide d'un seul outil, d'augmenter l'avance des chariots portant les deux outils jusqu'à la doubler par rapport à l'avance pour un seul outil. En d'autres termes, à conditions égales de travail pour les outils, le procédé suivant l'invention permet de réduire de moitié le temps de tournage nécessaire pour le tournage à un seul outil.

A cet effet, suivant l'invention, le procédé suivant l'invention consiste à mettre en contact avec la pièce à tourner au moins deux outils ayant des caractéristiques de coupe identiques et à déplacer ces outils pour qu'ils effectuent sensiblement le même travail, simultanément et en opposition, sur la même surface de la pièce et sensiblement dans une même zone de cette dernière s'étendant à proximité d'un plan perpendiculaire à l'axe de la pièce et passant par l'axe d'un des outils.

L'invention a également pour objet un tour pour la mise en oeuvre du procédé susdit.

Suivant l'invention, ce tour comprend deux chariots porte-outil disposés de part et d'autre de l'axe du tour, des moyens pour entraîner ces deux chariots à la même vitesse et dans le même sens suivant une direction parallèle à l'axe du tour et des moyens pour entraîner lesdits chariots à la même vitesse et en sens contraire suivant une direction perpendiculaire à l'axe du tour.

D'autres détails et particularités de l'invention ressortiront de la description des dessins annexés au présent mémoire et qui, d'une part, illustrent le procédé suivant l'invention et, d'autre part, représentent, à titre d'exemples non limitatifs, plusieurs formes de réalisation particulières du tour suivant l'invention.

Les figures 1, 3, 5 et 7 sont des vues schématiques en plan montrant les deux outils utilisés, conformément au procédé suivant l'invention, pour réaliser respectivement un chariotage extérieur, un gorge, un chariotage intérieur et un filet à une seule entrée.

Les figures 2, 4, 6 et 8 sont des vues en coupe suivant les lignes II-II, IV-IV, VI-VI et VIII-VIII des figures 1, 3, 5 et 7.

La figure 9 est une vue schématique de la section d'une pièce, par un plan perpendiculaire à son axe, montrant la matière enlevée par chaque outil au cours d'un tour complet de la pièce autour de son axe, lors de la réalisation d'une gorge.

La figure 10 est une vue schématique en plan montrant, lors d'une opération de chariotage, la matière enlevée par chacun des outils pour un tour de broche.

La figure 11 est une vue schématique d'un tour suivant l'invention dont les deux chariots porte-outil sont commandés par une vis unique à partir d'une barre de chariotage.

La figure 12 est une vue schématique d'un tour à copier suivant l'invention, dont les deux chariots porte-outil sont commandés hydrauliquement.

La figure 13 est une vue schématique d'un tour à commandes numériques suivant l'invention, du type dit "tour à quatre axes".

Dans les différentes figures, les mêmes notations de référence désignent des éléments identiques ou analogues.

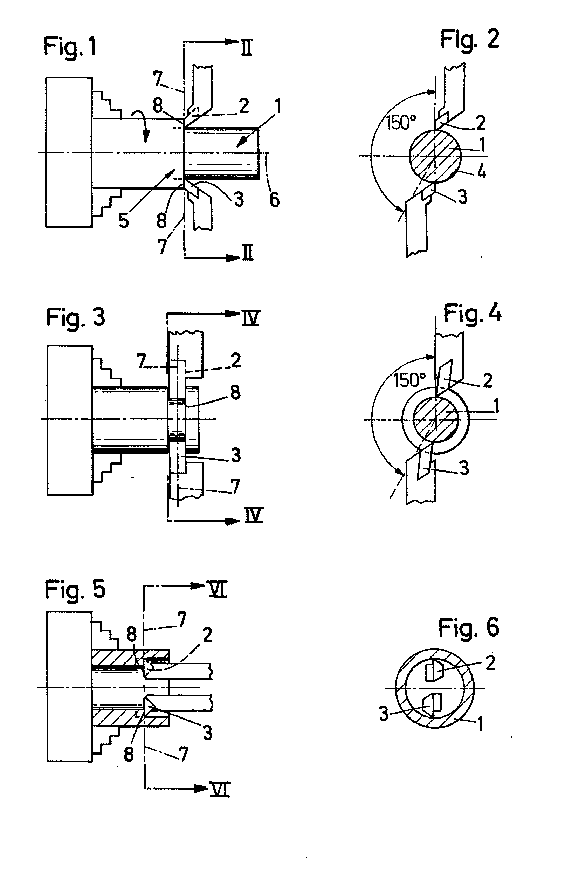

Le procédé de tournage suivant l'invention et illustré aux figures 1 à 9 consiste à mettre en contact avec la pièce 1 à tourner deux outils 2 et 3 ayant des caractéristiques de coupe identiques et à déplacer ces outils pour qu'ils effectuent sensiblement le même travail, simultanément et en opposition, sur la même surface 4 de la pièce et sensiblement dans une même zone 5 s'étendant à proximité d'un plan perpendiculaire à l'axe 6 de la pièce et passant par l'axe 7 d'un des outils.

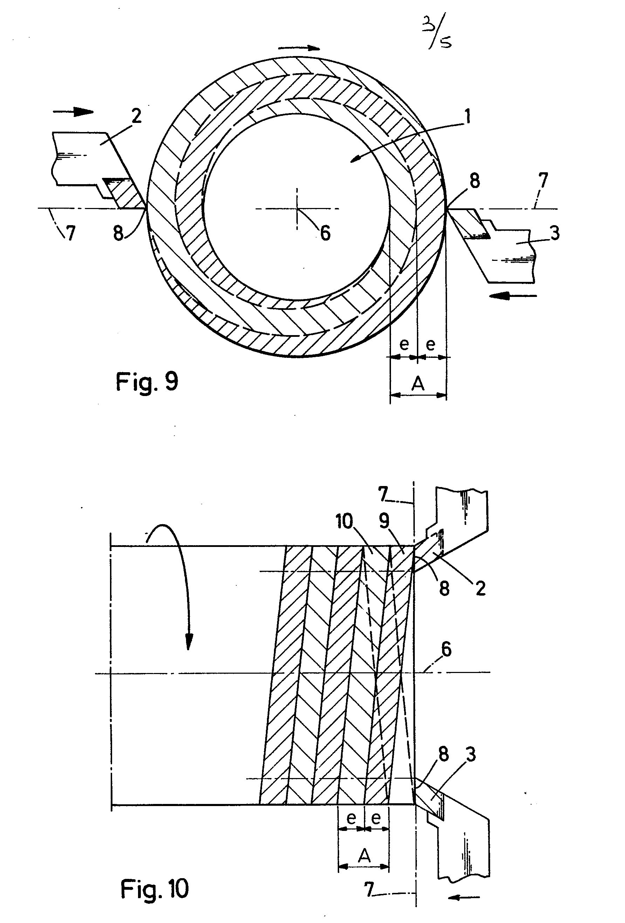

Pour les travaux extérieurs (figures 1 et 2) et intérieurs (figures 5 et 6) de chariotage ou de surfaçage et de filetage à deux entrées, on place les axes 7 des outils afin que ces axes coïncident avec l'intersection d'un plan passant par l'axe 6 de la pièce 1 avec un plan perpendiculaire à cet axe, c'est-à-dire que l'on aligne les outils à 180 degrés, on règle les distances séparant les arêtes de coupe 8 de l'axe 6 pour que ces distances soient égales et on déplace, pour chaque passe, les deux outils simultanément, à la même vitesse et dans le même sens et parallèlement à l'axe de la pièce, en tournage cylindrique, pour que les distances séparant les outils de l'axe restent constamment égales. On constate, en examinant la figure 10, que les outils 2 et 3 travaillent exactement dans les mêmes conditions et effectuent exactement le même travail, ces outils 2 et 3 enlevant respectivement un copeau 9 et un copeau 10 de même épaisseur e de sorte que l'avance A par tour de broche correspond à 2 e. Malgré cette avance double, il résulte également de la figure 10 que l'état de finition de la pièce est le même que si l'on avait usiné la pièce avec un seul outil réglé pour une épaisseur de copeau e et une avance $\frac{A}{2}$,

la vitesse de rotation de la pièce étant la même. Il résulte donc que le procédé suivant l'invention permet de réduire le temps de tournage par rapport au tournage à l'aide d'un seul outil, cette réduction pouvant, pour un même état de finition de la pièce, aller jusqu'à 50%.

Il résulte également des dessins, et surtout de la figure 9, que les quantités de matière enlevées par les outils 2 et 3 sont à chaque instant identiques et que, de ce fait, les efforts qui s'exercent sur la pièce lors du tournage sont parfaitement équilibrés, ce qui permet d'utiliser le procédé suivant l'invention même pour usiner des pièces offrant peu de résistance à la flexion, ce qui n'est pas le cas du procédé connu où des outils travaillent simultanément dans deux zones distinctes de la pièce à usiner.

Pour la réalisation de gorges, on place, comme montré aux figures 3, 4 et 9, les axes 7 des outils 2 et 3 afin que ces axes coïncidents avec l'intersection d'un plan passant par l'axe de la pièce 1 avec un plan perpendiculaire à ce dernier. On règle les distances séparant les arêtes de coupe 8 de l'axe 6 pour que ces distances soient égales et on déplace simultanément les deux outils en direction de l'axe 6, à la même vitesse et en sens contraire pour que les distances qui les séparent de l'axe de la pièce restent égales.

En tournage conique, on procède de la même manière que pour le tournage cylindrique, les outils étant déplacés simultanément, à la même vitesse, dans le même sens suivant l'axe 6 de la pièce afin que les distances séparant les outils dudit axe restent égales entre elles pour chaque section de la pièce.

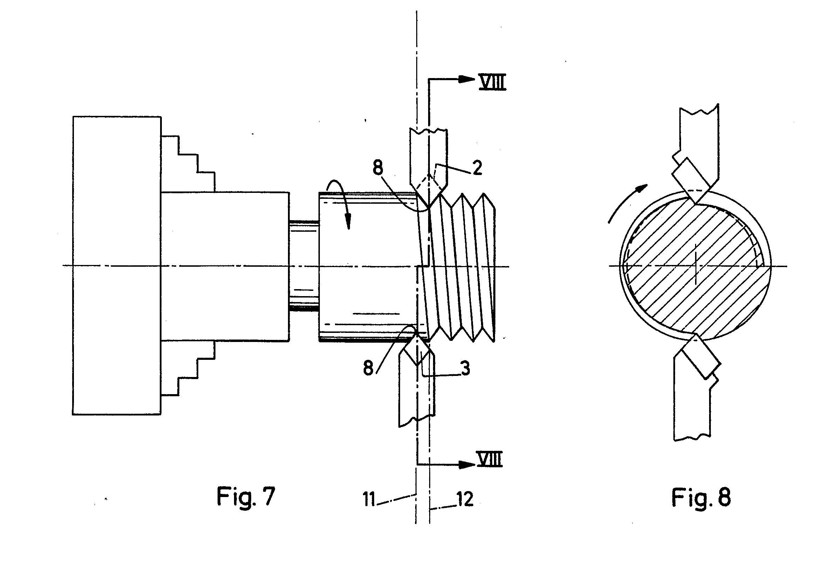

Pour la réalisation d'un filet à une entrée, on dispose, comme montré à la figure 7, les axes 7 des outils pour que chacun de ceux-ci coïncide avec une des intersections d'un plan passant par l'axe 6 de la pièce à tourner avec deux plans, de traces 11 et 12, perpendiculaires à cet axe et situés à une distance correspondant à un demi pas du filet. A chaque passe, on règle les distances séparant les arêtes 8 des outils 2 et 3 de l'axe 6 pour que l'arête 8 de l'outil 2 soit plus proche dudit axe 6 que l'arête 8 de l'outil 3, l'arête 8 de l'outil 2 étant plus proche de l'axe 6 d'une distance égale à la profondeur du filet effectué par passe. On entraîne alors les outils 1 et 2 simultanément, à la même vitesse et, pour un tournage cylindrique, parallèlement à l'axe 6 pour que les distances qui séparent les outils 2 et 3 de ce dernier restent constamment égales. Dans le cas du tournage conique, on déplace les outils suivant l'axe 6 pour que lesdites distances restent égales entre elles pour chaque section de la pièce.

Suivant l'invention, on pourrait, pour faciliter l'évacuation des copeaux et obtenir une meilleure visibilité des outils 2 et 3, disposer ceux-ci de manière à ce que leurs axes 7 forment un angle inférieur à 180 degrés et par exemple un angle de 150 degrés. Pour des travaux nécessitant un déplacement de l'outil suivant l'axe 6 de la pièce et pour que les travaux effectués par les outils soient pratiquement identiques, on décale les outils 2 et 3 l'un par rapport à l'autre suivant l'axe de la pièce à tourner d'une distance, pour 150 degrés, égale à un douzième $\frac{(180°-150°)}{360°}$ de la distance (A) parcourue par les outils parallèlement à l'axe de la pièce pendant une révolution complète de celle-ci. Le décalage des outils est tel que l'outil qui entre le premier en contact avec la pièce est le second outil rencontré en suivant le sens de rotation de la pièce et en parcourant l'angle de 150 degrés susdit formé par les outils. Si on décalait l'outil 3 montré à la figure 2 pour qu'il fasse un angle de 150 degrés avec l'outil 2, c'est l'outil 2 qui entrerait le premier en contact avec la pièce à tourner.

Pour des travaux nécessitant un déplacement des outils perpendiculaire à l'axe 6, les axes des outils restent alignés dans un même plan perpendiculaire à l'axe 6 et on décalera dans le temps la mise en contact des outils 2 et 3 avec la pièce. Ce décalage correspondra, dans le cas d'un angle de 150 degrés formé par les outils, à un douzième $\frac{(180°-150°)}{360°}$ du temps nécessaire pour que la pièce effectue une révolution complète autour de son axe, l'outil entrant le premier en contact avec la pièce étant le second outil rencontré en suivant le sens de rotation de la pièce et en parcourant l'angle de 150 degrés formé par les outils. C'est ainsi que si on décalait l'outil 3 montré à la figure 4 pour qu'il fasse un angle de 150 degrés avec l'outil 2, c'est l'outil 2 qui entrerait le premier en contact avec la pièce, l'outil 3 entrant à son tour en contact avec cette dernière lorsqu'elle aura tourné d'un douzième de tour, compté à partir du moment de l'entrée en contact de l'outil 2 avec la pièce.

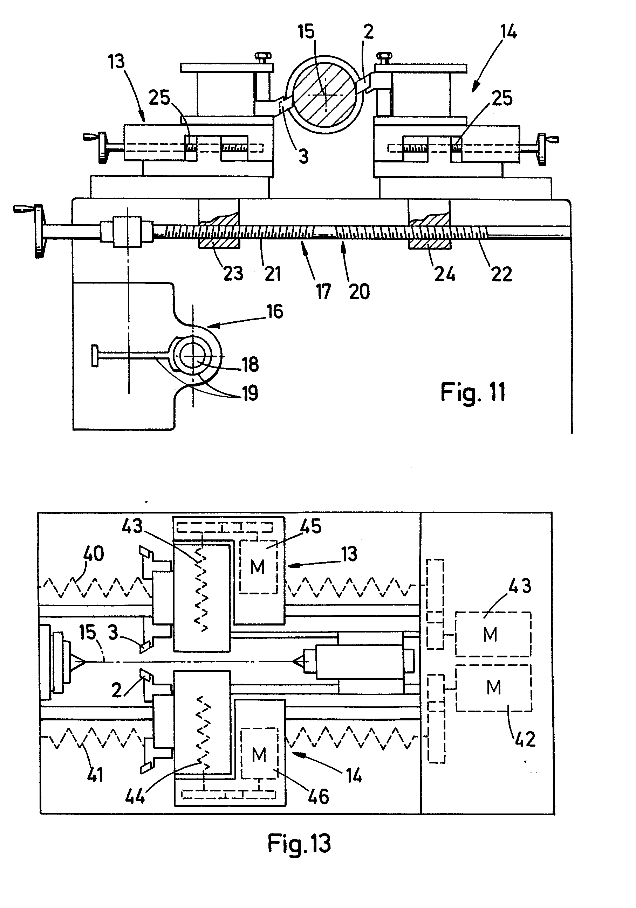

Le tour suivant l'invention, pour la mise en oeuvre du procédé susdit, et représenté schématiquement à la figure 11 comprend deux chariots porte-outil 13 et 14 disposés de part et d'autre de l'axe 15 du tour, des moyens 16 pour entraîner ces deux chariots à la même vitesse et dans le même sens suivant une direction parallèle à l'axe 15 et des moyens 17 pour entraîner les chariots 13 et 14, à la même vitesse et en sens contraire, suivant une direction perpendiculaire à l'axe 15. Les moyens 16 susdits comprennent une barre de chariotage unique 18 entraînant les deux chariots, d'une manière connue, par l'intermédiaire d'un ensemble vis et roue à vis 19 tandis que les moyens 17 comprennent une vis 20, à deux zones 21 et 22, dont l'axe est situé dans un plan perpendiculaire à l'axe 15, les pas des zones 21 et 22 étant inversés pour que, lorsque la vis 20 est entraînée en rotation, les chariots 13 et 14 se déplacent en sens contraire grâce aux écrous 23 et 24 fixés respectivement auxdits chariots 13 et 14, chacun de ces chariots comprenant en outre des moyens, tels qu'une vis 25, pour régler leur position par rapport à l'axe 15 et par rapport à la zone de vis 21 ou 22 correspondante.

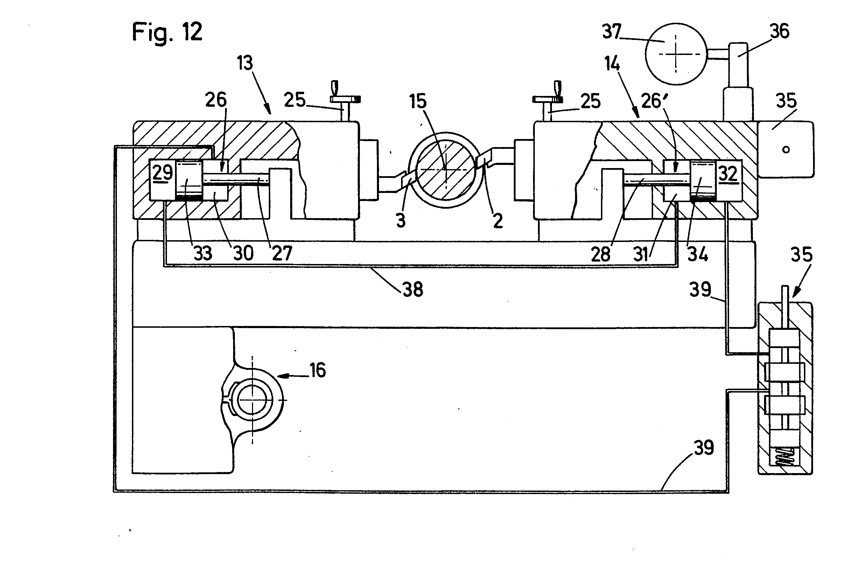

Le tour suivant l'invention et montré à la figure 12 est un tour à copier dont les chariots 13 et 14 sont actionnés, pour leurs déplacements en direction de l'axe 15 du tour, par des moyens constitués par des vérins hydrauliques à double effet 25 et 26, les moyens 16 entraînant les chariots 13 et 14 suivant une direction parallèle à l'axe 15 étant analogues à ceux du tour représenté à la figure 11. Pour permettre le déplacement des chariots 13 et 14 perpendiculairement à l'axe 15 et en sens contraire, les tiges

8

0015300

de piston 27 et 28 des vérins 26 et 26', dont les axes sont situés dans un plan perpendiculaire à l'axe 15 du tour, sont fixes et leurs chambres 29, 30 et 31, 32, disposées de part et d'autre des pistons 33 et 34, sont reliées entre elles de manière à ce que la chambre 29 du vérin 26 la plus éloignée de l'axe 15 soit directement en communication, par un conduit 38, avec la chambre 31 du vérin 26' la plus proche de l'axe 15, la chambre 32 du vérin 26' la plus éloignée de l'axe 15 étant mise en communication, par un conduit 39, avec la chambre 30, la plus proche de l'axe 15, du vérin 26 via une vanne de commande unique 35 actionnée par un palpeur 36 coopérant avec un gabarit 37. Pour faciliter la compréhension de la figure 12, la vanne 35 a été représentée une première fois dans la position réelle qu'elle occupe par rapport au palpeur et une seconde fois, schématiquement, pour illustrer le circuit complet d'alimentation des vérins 26 et 26'. Chacun des chariots 13 et 14 comprennent des moyens, tels que vis 25, pour régler leur position par rapport à l'axe 15, indépendamment de la vanne de commande 35.

La figure 13 illustre schématiquement un tour dit "tour à quatre axes" pour la mise en oeuvre du procédé susdit. Les moyens précités de ce tour pour entraîner les chariots 13 et 14 parallèlement à l'axe 15 du tour sont constitués par deux vis 40 et 41 parallèles, indépendants l'une de l'autre et commandées chacune par un moteur 42, 43. Les moyens précités pour entraîner les chariots 13 et 14 suivant une direction perpendiculaire à l'axe 15 comprennent deux vis 43 et 44 indépendantes entraînées chacune par un moteur 45, 46, les moteurs 42, 43, 45 et 46 étant programmés pour entraîner les outils 2 et 3 aux vitesses susdites et suivant les directions et sens précités.

Il doit être entendu que l'invention n'est nullement limitée aux formes de réalisation décrites et que bien des modifications peuvent être apportées à ces dernières sans sortir du cadre du présent brevet.

REVENDICATIONS

1. Procédé de tournage, caractérisé en ce qu'il consiste à mettre en contact avec la pièce à tourner au moins deux outils ayant des caractéristiques de coupe identiques et à déplacer ces outils pour qu'ils effectuent sensiblement le même travail, simultanément et en opposition, sur la même surface de la pièce et sensiblement dans un même zone de cette dernière s'étendant à proximité d'un plan perpendiculaire à l'axe de la pièce et passant par l'axe d'un des outils.

2. Procédé de tournage suivant la revendication 1, caractérisé en ce que, pour des travaux extérieurs et intérieurs de chariotage, de surfaçage et pour la réalisation de filetages à deux entrées, on place les axes des outils afin qu'ils coïncident avec l'intersection d'un plan passant par l'axe de la pièce à tourner avec un plan perpendiculaire à cet axe, on règle, à chaque passe, les distances séparant les outils de ce dernier pour qu'elles soient égales et on déplace simultanément les deux outils, à la même vitesse, dans le même sens et suivant l'axe de la pièce de manière à ce que les distances qui les séparent de ce dernier restent, en tournage cylindrique, constamment égales et, en tournage conique, égales entre elles pour chaque section de la pièce.

3. Procédé de tournage suivant la revendication 1, caractérisé en ce que, pour la réalisation de gorges, on place les axes des outils afin qu'ils coïncident avec l'intersection d'un plan passant par l'axe de la pièce à tourner avec un plan perpendiculaire à cet axe, on règle les distances séparant les outils de ce dernier pour qu'elles soient égales et on déplace simultanément les deux outils, en direction de l'axe de la pièce, à la même vitesse et en sens contraire pour que les distances qui les séparent de l'axe de la pièce restent égales.

4. Procédé de tournage suivant la revendication 1, caractérisé en ce que, pour la réalisation d'un filet à une entrée, on dispose les axes des outils pour que chacun de ceux-ci coïncide avec une des intersections d'un plan passant par l'axe de la pièce à tourner avec deux plans perpendiculaires à cet axe et distants d'un demi pas du filet, à chaque passe, on règle les distances séparant les outils de l'axe de la pièce pour que l'arête d'un des outils soit plus proche de l'axe de la pièce à tourner d'une distance égale à la profondeur du filet effectué par passe et on entraîne simultanément les deux outils, à la même vitesse, dans le même sens et suivant l'axe de la pièce, de manière à ce que les distances qui les séparent de l'axe de la pièce restent, pour la réalisation d'un filet cylindrique, constamment égales et, pour la réalisation d'un filet conique, égales entre elles pour chaque section de la pièce.

5. Procédé de tournage suivant la revendication 1, caractérisé en ce que, pour faciliter l'évacuation des copeaux et obtenir une meilleure visibilité des outils, on dispose les outils de manière à ce que chacun de leurs axes soit situé dans un plan passant par l'axe de la pièce à tourner, ces deux plans étant distincts et formant un angle inférieur à 180 degrés.

6. Procédé de tournage suivant la revendication 5, caractérisé en ce que, pour des travaux nécessitant un déplacement de l'outil suivant l'axe de la pièce à tourner et afin que les travaux effectués par les outils soient sensiblement identiques, on décale les outils l'un par rapport à l'autre suivant l'axe de la pièce à tourner, ce décalage étant sensiblement égal à $\frac{x}{360}$, x étant la différence entre 180 degrés et l'angle inférieur à 180 degrés formé par les deux plans susdits, de la distance parcourue par les outils, parallèlement à l'axe de la pièce, pendant une révolution complète de cette dernière, le décalage étant tel que l'outil entrant le premier en contact avec la pièce est le second outil rencontré en suivant le sens de rotation de la pièce et en parcourant l'angle inférieur à 180 degrés formé par les outils.

7. Procédé de tournage suivant la revendication 5, caractérisé en ce que, pour des travaux où les outils se déplacent perpendiculairement à l'axe de la pièce, on décale dans le temps la mise en contact des outils avec la pièce, l'outil entrant le premier en contact avec cette dernière étant le second outil rencontré en suivant le sens de rotation de la pièce et en parcourant l'angle inférieur à 180 degrés formé par les outils, ce décalage étant sensiblement égal à $\underline{x}$, x étant la différence entre 180 degrés et l'angle inférieur à 180 degrés formé par les deux plans susdits, du temps que met la pièce pour effectuer une révolution complète autour de son axe.

8. Tour pour la mise en oeuvre du procédé suivant l'une quelconque des revendications 1 à 7, caractérisé en ce qu'il comprend deux chariots porte-outil disposés de part et d'autre de l'axe du tour, des moyens pour entraîner ces deux chariots à la même vitesse et dans le même sens suivant une direction parallèle à l'axe du tour et des moyens pour entraîner lesdits chariots à la même vitesse et en sens contraire suivant une direction perpendiculaire à l'axe du tour.

9. Tour suivant la revendication 8, caractérisé en ce que les moyens précités pour entraîner les deux chariots suivant une direction parallèle à l'axe du tour comprennent une barre de chariotage unique pour les deux chariots, les moyens susdits pour entraîner les deux chariots suivant une direction perpendiculaire à l'axe du tour comprenant une vis à deux zones dont l'axe est situé dans un plan perpendiculaire à l'axe du tour et dont les pas sont inversés, chacun des chariots coopérant avec une zone de la vis, des moyens étant agencés sur les chariots pour régler la position de chacun de ceux-ci par rapport à l'axe du tour indépendamment de ladite vis.

10. Tour suivant la revendication 8, caractérisé en ce que les moyens précités pour entraîner les deux chariots suivant une direction parallèle à l'axe du tour comprennent une barre de chariotage unique pour les deux chariots, les moyens susdits pour entraîner les deux chariots suivant une direction perpendiculaire à l'axe du tour. comprenant deux vérins à double effet agencés chacun sur un des chariots, les tiges de piston de ces vérins, dont les axes sont situés dans les plans s'étendant transversalement à l'axe du tour, étant fixés et leurs chambres, disposées de part et d'autre des pistons, étant reliées entre elles de manière à ce que la chambre d'un des vérins la plus éloignée de l'axe du tour soit en communication directement avec la chambre de l'autre vérin la plus proche de l'axe du tour, la chambre de ce dernier vérin la plus éloignée de l'axe du tour étant mise en communication avec la chambre de l'autre vérin la plus proche de l'axe du tour par l'intermédiaire d'une vanne de commande unique, des moyens étant agencés sur chacun des chariots pour régler leur position par rapport à l'axe du tour indépendamment de la vanne de commande.

11. Tour suivant la revendication 8, caractérisé en ce que les moyens précités pour entraîner les deux chariots suivant une direction parallèle à l'axe du tour comprennent deux vis parallèles, indépendantes l'une de l'autre, commandées chacune par un moteur, les moyens susdits, pour entraîner les deux chariots suivant une direction perpendiculaire à l'axe du tour, comprenant deux vis indépendantes, dont les axes sont situés dans des plans perpendiculaires à l'axe du tour, et un moteur de commande pour chacune de ces vis, les quatre moteurs susdits étant programmés pour entraîner les outils aux vitesses susdites et suivant les directions et sens précités.

0015300

1/5

Fig. 1

Fig. 2

Fig. 3

Fig. 4

Fig. 5

Fig. 6

Fig. 7

Fig. 8

VIII

VIII

8

2

8

3

11

12

2/5

0015300

0015300

3/5

Fig. 9

Fig. 10

Fig. 11

Fig.13

Fig. 12

**Office européen des brevets**

## RAPPORT DE RECHERCHE EUROPEENNE

Numéro de la demande

EP 79 10 0742

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| X | US – A – 1 920 209 (NORTON)<br>* page 2, lignes 73-105 et 145-150; page 3, lignes 1-101, figure 3 *<br><br>--- | 1-4,8,9 | **B 23 B 3/06** |
| X | FR – A – 2 266 564 (CRI-DAN)<br>* page 3, lignes 18-30; figure 2 *<br><br>-- | 1-4,8,9 | |
| | US – A – 2 494 073 (WEAVER)<br>* colonne 2, lignes 26-46; figures I et IV *<br><br>--- | 1 | DOMAINES TECHNIQUES RECHERCHES (Int. Cl. ³)<br><br>**B 23 B 3/00** |
| A | DE – C – 863 434 (DIEDESHEIM) | | |
| A | US – A – 2 232 304 (BAKER)<br><br>------ | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 24-10-1979 | BOGAERT |

OEB Form 1503.1 06.78